# EUROPEAN PATENT APPLICATION

(11) **EP 3 056 742 A1**
(43) Date of publication of application: **17.08.2016**
(21) Application number: 16155991.9
(22) Date of filing: 16.02.2016
(51) Int. Cl.: F04D 29/32, F04D 29/02, F01D 5/20

(54) **COMPRESSOR AIRFOIL**

(30) Priority: 16.02.2015 US 201514623245
(71) Applicant: United Technologies Corporation, Farmington, CT 06032 (US)
(72) Inventor: FURRER, David Ulrich, Marlborough, CT Connecticut 06447 (US); HILLEBRAND, Joseph G., Bolton, CT Connecticut 06043 (US); KASPROW, Thomas D., Glastonbury, CT Connecticut 06033 (US); STROCK, Christopher W., Kennebunk, ME Maine 04043 (US); BINTZ, Matthew E., West Hartford, CT Connecticut 06107 (US)
(74) Representative: Leckey, David Herbert

(57) **Abstract**

A compressor airfoil (100) has a leading edge (102), a trailing edge (104), and a radially outboard edge (106) connecting the leading edge (102) and the trailing edge (104). The leading edge (102) is formed according to a leading edge tip profile (110) and the trailing edge (104) is formed according to a trailing edge tip profile (112). The leading edge tip profile (110) and/or trailing edge tip profile (112) has a chamfer and/or a radius. In this manner, contact stress experienced by the compressor airfoil (100) such as upon contact with a surrounding abradable seal (122) are ameliorated. The leading edge tip profile (110) and/or trailing edge tip profile (112) are coated with an abrasive coating (108) such as to enhance fitting of the abradable seal (122) to the path of the compressor airfoil (100) upon such contact.

## Description

### FIELD

The present disclosure relates generally to a gas turbine engine, and more specifically, to a compressor airfoil for gas turbine engines.

### BACKGROUND

In the compressor of a gas turbine engine, rotor airfoils are surrounded by an abradable circumferential outer airfoil seal (OAS). The abradable material is worn away by abrasive on the tips of the rotor airfoils, during normal run-in operation at the beginning of engine life, and also during more aggressive rub incursions during unplanned events such as foreign object ingestion and compressor surges. Sufficiently aggressive radial and/or axial rubs will result in the leading edge (LE) and trailing edge (TE) portions of the airfoil tip contacting the abradable seal. Traditionally the geometry of the LE tip and TE tip are sharp corners, designed primarily for aerodynamic function. As a result, the contact stresses, such as Hertzian stresses, are very high during these severe rubs, which causes abrasive wear, scoring, pitting, and/or spalling of the airfoil and/or abrasive coating as well as significant local temperature spikes due to sliding friction.

### SUMMARY

A compressor airfoil is disclosed. The compressor airfoil includes a leading edge having a leading edge tip profile with one of a leading edge tip radius and a leading edge tip chamfer and a trailing edge having a trailing edge tip profile with one of a trailing edge tip radius and a trailing edge tip chamfer. The compressor airfoil also includes a radially outboard edge including a surface connecting the leading edge and the trailing edge.

The compressor airfoil may have an abrasive coating disposed over at least a portion of the compressor airfoil. The abrasive coating is disposed over at least a portion of the leading edge tip profile and/or at least a portion of the trailing edge tip profile. The abrasive coating is disposed over at least a portion of the radially outboard edge.

The leading edge tip radius includes at least one of polygonal curvature, polyhedral curvature, complex curvature, conventional curvature and compound curvature.

The trailing edge tip radius includes at least one of polygonal curvature, polyhedral curvature, complex curvature, conventional curvature and compound curvature.

A compressor airfoil is disclosed including a leading edge including a leading edge tip profile, a trailing edge including a trailing edge tip profile, a radially outboard edge including a surface connecting the leading edge and the trailing edge, and an abrasive coating disposed over at least a portion of the radially outboard edge and at least a portion of at least one of the leading edge tip profile and the trailing edge tip profile.

Similarly, the leading edge tip radius includes at least one of: polygonal curvature, polyhedral curvature, complex curvature, conventional curvature and compound curvature. The abrasive coating can cover entirely the leading edge tip radius.

Also similarly, the trailing edge tip radius includes at least one of: polygonal curvature, polyhedral curvature, complex curvature, conventional curvature and compound curvature. The abrasive coating can cover entirely the trailing edge tip radius.

The leading edge tip profile may include a leading edge tip chamfer. The trailing edge tip profile may include a trailing edge tip chamfer. The abrasive coating may entirely cover the leading edge tip chamfer and/or trailing edge tip chamfer.

A method is disclosed. The method may include forming a compressor airfoil bounded by a leading edge, a trailing edge, and a radially outboard edge connecting the leading edge and the trailing edge, forming a leading edge tip profile on the leading edge, and forming a trailing edge tip profile on the trailing edge. The leading edge tip profile includes a leading edge tip radius or a leading edge tip chamfer and the trailing edge tip profile includes a trailing edge tip radius or a trailing edge tip chamfer. The method may also include depositing an abrasive coating on the radially outboard edge and at least a portion of the trailing edge tip profile and/or may also include depositing an abrasive coating on the radially outboard edge and at least a portion of the leading edge tip profile.

### BRIEF DESCRIPTION OF THE DRAWINGS

The subject matter of the present disclosure is particularly pointed out and distinctly claimed in the concluding portion of the specification. A more complete understanding of the present disclosure, however, is best be obtained by referring to the detailed description and claims when considered in connection with the drawing figures, wherein like numerals denote like elements.
FIG. 1 illustrates cross-sectional view of an exemplary gas turbine engine;
FIG. 2 illustrates an example compressor airfoil having a radiused leading edge tip profile and a radiused trailing edge tip profile;
FIG. 3 illustrates an example compressor airfoil having a chamfered leading edge tip profile and a chamfered trailing edge tip profile; and
FIG. 4 depicts a method of forming a compressor airfoil.

### DETAILED DESCRIPTION

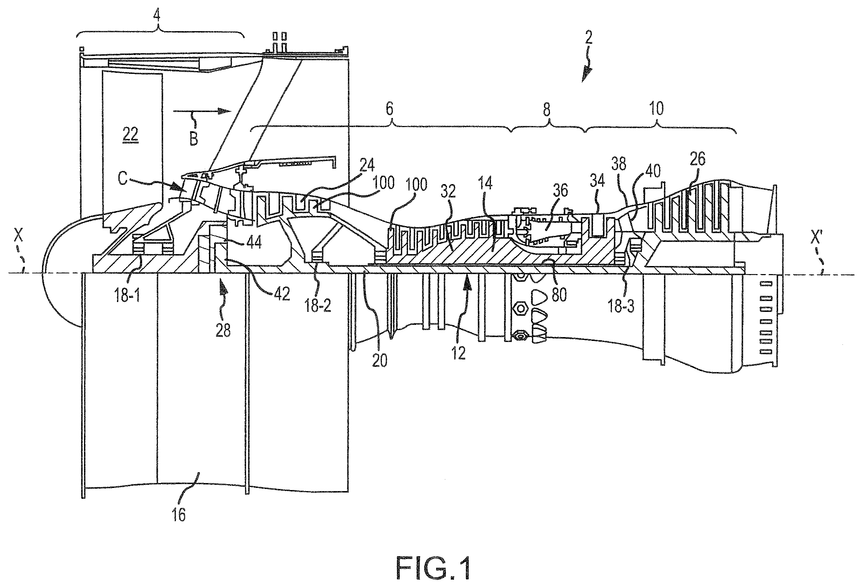

With reference to FIG. 1, an exemplary gas turbine engine 2 is provided. Gas turbine engine 2 is a two-spool turbofan that generally incorporates a fan section 4, a compressor section 6, a combustor section 8 and a turbine section 10. Alternative engines include, for example, an augmentor section among other systems or features. In operation, fan section 4 drives air along a bypass flow-path B while compressor section 6 drives air along a core flow-path C for compression and communication into combustor section 8 then expansion through turbine section 10. Although depicted as a turbofan gas turbine engine 2 herein, it should be understood that the concepts described herein are not limited to use with turbofans as the teachings is applicable to other types of turbine engines including three-spool architectures.

Gas turbine engine 2 generally comprises a low speed spool 12 and a high speed spool 14 mounted for rotation about an engine central longitudinal axis X-X' relative to an engine static structure 16 via several bearing systems 18-1, 18-2, and 18-3. It should be understood that bearing systems is alternatively or additionally provided at locations, including for example, bearing system 18-1, bearing system 18-2, and bearing system 18-3.

Low speed spool 12 generally comprises an inner shaft 20 that interconnects a fan 22, a low pressure compressor section 24, e.g., a first compressor section, and a low pressure turbine section 26, e.g., a first turbine section. Inner shaft 20 is connected to fan 22 through a geared architecture 28 that drives the fan 22 at a lower speed than low speed spool 12. Geared architecture 28 comprises a gear assembly 42 enclosed within a gear housing 44. Gear assembly 42 couples the inner shaft 20 to a rotating fan structure. High speed spool 14 comprises an outer shaft 30 that interconnects a high pressure compressor section 32, e.g., second compressor section, and high pressure turbine section 34, e.g., second turbine section. A combustor 36 is located between high pressure compressor section 32 and high pressure turbine section 34. A mid-turbine frame 38 of engine static structure 16 is located generally between high pressure turbine section 34 and low pressure turbine section 26. Mid-turbine frame 38 supports one or more bearing systems 18, such as 18-3, in turbine section 10. Inner shaft 20 and outer shaft 30 is concentric and rotates via bearing systems 18 about the engine central longitudinal axis X-X', which is collinear with their longitudinal axes. As used herein, a "high pressure" compressor or turbine experiences a higher pressure than a corresponding "low pressure" compressor or turbine.

The core airflow C is compressed by low pressure compressor section 24 then high pressure compressor section 32, mixed and burned with fuel in combustor 36, then expanded over high pressure turbine section 34 and low pressure turbine section 26. Mid-turbine frame 38 includes airfoils 40, which are in the core airflow path. Turbines 26, 34 rotationally drive the respective low speed spool 12 and high speed spool 14 in response to the expansion.

Gas turbine engine 2 is, for example, a high-bypass geared aircraft engine. The bypass ratio of gas turbine engine 2 is optionally greater than about six (6). The bypass ratio of gas turbine engine 2 is optionally greater than ten (10). Geared architecture 28 is an epicyclic gear train, such as a star gear system, e.g., sun gear in meshing engagement with a plurality of star gears supported by a carrier and in meshing engagement with a ring gear, or other gear system. Geared architecture 28 has a gear reduction ratio of greater than about 2.3 and low pressure turbine section 26 has a pressure ratio that is greater than about 5. The bypass ratio of gas turbine engine 2 is greater than about ten (10:1). The diameter of fan 22 is significantly larger than that of the low pressure compressor section 24, and the low pressure turbine section 26 has a pressure ratio that is greater than about 5:1. Low pressure turbine section 26 pressure ratio is measured prior to inlet of low pressure turbine section 26 as related to the pressure at the outlet of low pressure turbine section 26 prior to an exhaust nozzle. It should be understood, however, that the above parameters are exemplary of a suitable geared architecture engine and that the present disclosure contemplates other turbine engines including direct drive turbofans.

The next generation of turbofan engines is designed for higher efficiency, which is associated with higher pressure ratios and higher temperatures in the high speed spool 14 and other engine sections. These higher operating temperatures and pressure ratios create operating environments that cause thermal loads that are higher than thermal loads conventionally encountered. Operating conditions in high pressure compressor section 32 are often approximately 1400 °F (approximately 760 °C) or more, and operating conditions in combustor 36 are often higher. Moreover, during transient events and incursions, such as during periods of acceleration, or during events such as bird strike events, temperatures and pressures rapidly vary, such shocks varying Hertzian stresses and rub contact of compressor airfoils.

The present disclosure contemplates considering Hertzian stresses during rub contact when producing the leading edge (LE) and trailing edge (TE) portions of an airfoil. Per Hertzian theory, the maximum contact pressure is in part a function of the radius of both the curved bodies that are in contact in compression. All other parameters being equal, the larger the radii in contact, the smaller the stresses. During radial and/or axial rub events the LE and TE tips cut into an abradable seal, imparting their own small-radius geometry in the seal at the points of LE tip and TE tip contact and resulting in even higher stresses during subsequent rubs. Compressor airfoil geometries, such as that disclosed herein and such as illustrated in the Figures, address Hertzian stresses during rub in gas turbine engine airfoil design resulting in reducing these contact stresses. The resulting design includes a rounded LE tip and TE tip, wherein specific geometries are unique to each part based on independent analysis of each rotor stage, for example, a compressor airfoil 100 disposed in a high pressure compressor section 32 and a compressor airfoil 100 disposed in a low pressure compressor section 24 of compressor section 6. Moreover, the resulting reduced susceptibility to damage facilitates the implementation of tighter clearances between the compressor airfoil 100 and the abradable seal 122 and/or thinner compressor airfoil 100 architectures.

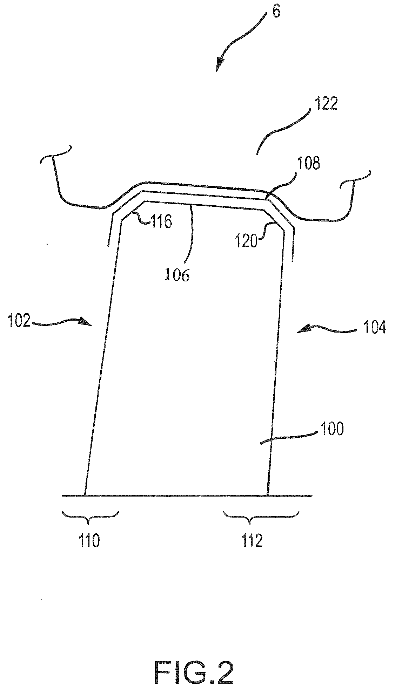

For example, with reference to FIGs. 2-3, a compressor airfoil 100 comprises an airfoil configured to compress and spin a fluid flow, such as a rotor. The compressor airfoil 100 has a leading edge 102. For example, the leading edge 102 of a spinning compressor airfoil 100 such as a rotor is the edge of the compressor airfoil 100 toward which the compressor airfoil 100 is spinning.

The compressor airfoil 100 comprises a trailing edge 104. For example, the trailing edge 104 of a spinning compressor airfoil 100 such as a rotor is the edge of the compressor airfoil 100 away from which the compressor airfoil 100 is spinning.

The compressor airfoil 100 has a radially outboard edge 106 that includes a tip of the compressor airfoil 100, e.g., a surface connecting the trailing edge 104 and the leading edge 102 and forming the radially outermost boundary of the compressor airfoil 100.

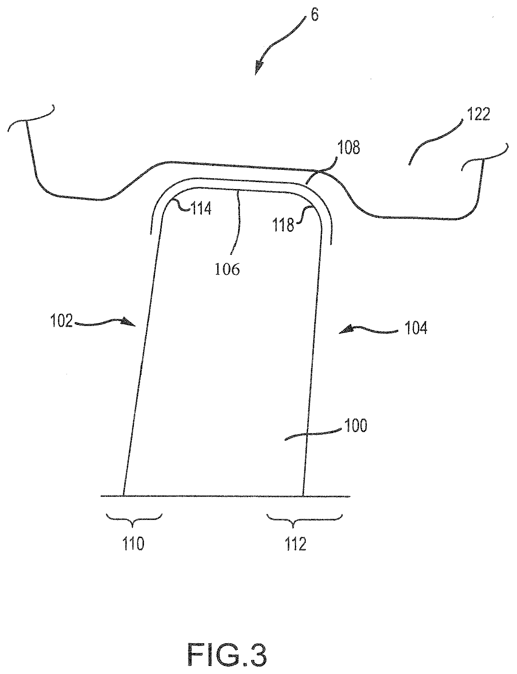

According to the disclosed embodiments, the compressor airfoil 100 has an abrasive coating 108. An abrasive coating 108 may be disposed along a portion of at least one of the leading edge 102, radially outboard edge 106, and the trailing edge 104 of the compressor airfoil 100. The abrasive coating 108 covers the radially outboard edge 106 and extends over a portion of the leading edge 102 and/or the trailing edge 104. For instance, the abrasive coating 108 extends over the leading edge radius 114 (FIG. 3) and/or the trailing edge radius 118 (FIG. 3) and/or extends over a leading edge chamfer 116 (FIG. 2) and/or a trailing edge chamfer 120 (FIG. 2).

As used herein, "extend over" an article, means to coat a portion of the article, extending outward therefrom. For instance, to "extend over" the leading edge radius 114 (FIG. 3) means to coat at least the portion of the leading edge 102 made up of the leading edge radius 114 (FIG. 3) and to extend outward therefrom, locally thickening the compressor airfoil 100.

The abrasive coating 108 comprises a uniform thickness, or is thicker in areas corresponding to expected deeper incursions into the abradable seal 122 or where greater cutting capability is desired over the life of the compressor airfoil 100. For instance, the tip coating is a uniform thickness, or the tip coating has an increased thickness over a leading edge radius 114 (FIG. 3) and/or the trailing edge radius 118 (FIG. 3) and/or a leading edge chamfer 116 (FIG. 2) and/or a trailing edge chamfer 120 (FIG. 2).

The abrasive coating 108 comprises a frictional material selected to grind away a portion of an abradable seal 122. For instance, the turbine engine 2 comprises an abradable seal 122 disposed annularly outward of the path of the compressor airfoil 100. As the compressor airfoil 100 rotates, the leading edge 102, radially outboard edge 106 and/or trailing edge 104 at least periodically impinge the abradable seal 122. The abrasive coating 108 facilitates the grinding away of the abradable seal 122 proximate to the impingement of the compressor airfoil 100. In this manner, the abradable seal 122 is worn away at the site of the impingement, after which the compressor airfoil 100 rotates with relative freedom, and yet a fluidic seal is formed about the radially outboard edge 106 of the compressor airfoil 100, diminishing the leakage of fluid flow around the compressor airfoil 100 and directing the fluid flow through the rotational plane of the compressor airfoil 100.

The leading edge 102 comprises a leading edge tip profile 110. The leading edge tip profile 110 comprises a shape selected to ameliorate Hertzian stresses. For example, with reference to FIG. 2, the leading edge tip profile 110 comprises a leading edge radius 114. With reference to FIG. 3, the leading edge tip profile 110 comprises a leading edge chamfer 116. As such, the leading edge tip profile 110 comprises any shape selected to ameliorate Hertzian stress.

The trailing edge 104 comprises a trailing edge tip profile 112. The trailing edge tip profile 112 comprises a shape selected to ameliorate Hertzian stresses. For example, with reference to FIG. 2, the trailing edge tip profile 112 comprises a trailing edge radius 118. For example, with reference to FIG. 3, the trailing edge tip profile 112 comprises a trailing edge chamfer 120. As such, the trailing edge tip profile 112 comprises any shape selected to ameliorate Hertzian stress.

With reference to both FIGs. 2 and 3, the trailing edge tip profile 112 and the leading edge tip profile 110 are one of same and different. For example, the trailing edge tip profile 112 comprises a trailing edge chamfer 120 or a trailing edge radius 118 or any other desired shape, while the leading edge tip profile 110 comprises a leading edge chamfer 116 or a leading edge radius 114, or any other desired shape, and the shapes are optionally dissimilar, for instance a leading edge chamfer 116 and a trailing edge radius 118 or a leading edge radius 114 and a trailing edge chamfer 120, or the like.

The leading edge radius 114 and/or trailing edge radius 118 comprise a variety of geometries or combinations of geometries. For instance, the leading edge radius 114 and/or trailing edge radius 118 comprise a radius that is at least one of polygonal, polyhedral, a complex curvature, conventional curvature, compound curvature, and/or any curvature. The radius is optionally at least one of a 2D and/or 3D projection of a relief cut such as having a curved shape when viewed in a plane perpendicular to the axis of rotation of the compressor airfoil 100. Similarly, a leading edge chamfer 116 and/or a trailing edge chamfer 120 are optionally a variety of geometries or combinations of geometries such as a chamfer having a single angle, or a chamfer having multiple angles and/or the like.

In summary, with reference to FIGS. 1-4, a compressor airfoil 100 may have a leading edge 102 that has a leading edge tip profile 110 and a trailing edge 104 that has a trailing edge tip profile 112. Each profile 110, 112 may have a radius and/or a chamfer. For instance, the leading edge tip profile 110 may have a leading edge chamfer 116 or a leading edge radius 114 and the trailing edge tip profile 112 may have a trailing edge chamfer 120 or a trailing edge radius 118. An abrasive coating 108 may cover a portion of one or both profile 110, 112, and also all or a portion of the radially outboard edge 106. As the compressor airfoil 100 spins, the chamfer or radius of each profile 110, 112 ameliorates Hertzian stresses caused by incursions of the compressor airfoil 100 into the abradable seal 122. The abrasive coating 108 further ameliorates the Hertzian stresses as well as assists the grinding away of the abradable seal 122. This enhances the aerodynamic efficiency of the compressor airfoil 100 by ameliorating fluid leakage around the compressor airfoil 100.

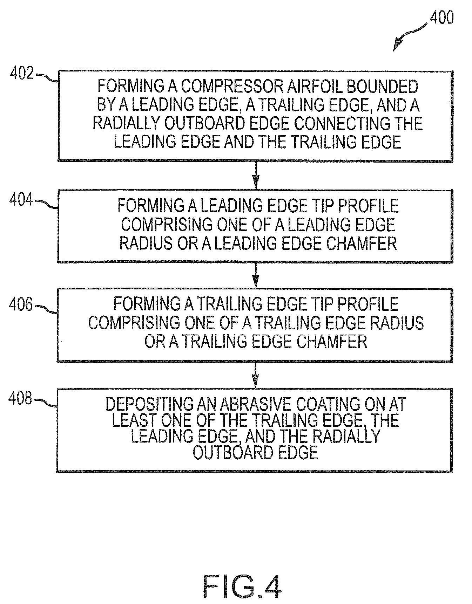

Methods of forming a compressor airfoil 100 are also presented. For instance, with reference to FIG. 4, a method 400 includes forming a compressor airfoil 100 bounded by a leading edge 102, a trailing edge 104 and a radially outboard edge 106 connecting the leading edge 102 and the trailing edge 104 (step 402). The method 400 further includes forming a leading edge tip profile 110 comprising one of a leading edge radius 114 or a leading edge chamfer 116 (step 404) and forming a trailing edge tip profile 112 comprising one of a trailing edge radius 118 or a trailing edge chamfer 120 (step 406). The method 400 includes depositing an abrasive coating 108 on at least one of the trailing edge 104, the leading edge 102 and the radially outboard edge 106 (step 408). The steps are carried out in parallel, or in sequences as desired.

Having discussed aspects of a compressor airfoil 100, a compressor airfoil 100 is made of a single material, or different materials, or combinations of materials. For example, components of the system are made from metal. For example, aspects of a compressor airfoil 100 are metal, such as titanium, aluminum, steel, or stainless steel, though it alternatively comprises numerous other materials configured to provide support. Components of the system are optionally made from other materials such as, for example, composite, ceramic, plastics, polymers, alloys, glass, binder, epoxy, polyester, acrylic, or any material or combination of materials having desired material properties, such as heat tolerance, strength, stiffness, or weight. Portions of a compressor airfoil 100 as disclosed herein are optionally made of different materials or combinations of materials, and/or comprise coatings. Moreover, components of the compressor airfoil 100 are in some instances mixtures of different materials according to different ratios, gradients, and the like.

A compressor airfoil 100 thus has multiple materials, or any material configuration suitable to enhance or reinforce the resiliency and/or support of the system when subjected to wear in an aircraft operating environment or to satisfy other desired electromagnetic, chemical, physical, or material properties, for example coefficient of thermal expansion, ductility, weight, flexibility, strength, or heat tolerance.

One such material is an austenitic nickel-chromium-based alloy such as Inconel®, which is available from Special Metals Corporation of New Hartford, New York, USA. Other such material includes ceramic matrix composite (CMC). Further material includes refractory metal, for example, an alloy of titanium, such as, titanium-zirconium-molybdenum (TZM).

Benefits, other advantages, and solutions to problems have been described herein with regard to specific embodiments. The scope of the disclosure, however, is provided in the appended claims.

## Claims

1. A compressor airfoil (100) comprising:
a leading edge (102) comprising a leading edge tip profile (110) comprising one of a leading edge tip radius (114) and a leading edge tip chamfer (116);
a trailing edge (104) comprising a trailing edge tip profile (112) comprising one of a trailing edge tip radius (118) and a trailing edge tip chamfer (120); and
a radially outboard edge (106) comprising a surface connecting the leading edge (102) and the trailing edge (104).

2. The compressor airfoil according to claim 1, comprising an abrasive coating (108) disposed over at least a portion of the compressor airfoil (100).

3. The compressor airfoil according to claim 2, wherein the abrasive coating (108) is disposed over at least a portion of the leading edge tip profile (110) and at least a portion of the trailing edge tip profile (112).

4. The compressor airfoil according to claim 2 or 3, wherein the abrasive coating (108) is disposed over at least a portion of the leading edge tip profile (110) and at least a portion of the radially outboard edge (106), and/or over at least a portion of the trailing edge tip profile (112) and at least a portion of the radially outboard edge (106).

5. A compressor airfoil (100) comprising:
a leading edge (102) comprising a leading edge tip profile (110);
a trailing edge (104) comprising a trailing edge tip profile (112);
a radially outboard edge (106) comprising a surface connecting the leading edge (102) and the trailing edge (104); and
an abrasive coating (108) disposed over at least a portion of the radially outboard edge (106) and at least a portion of at least one of the leading edge tip profile (110) and the trailing edge tip profile (112).

6. The compressor airfoil according to claim 5, wherein the leading edge tip profile (110) comprises a leading edge tip chamfer (116), and wherein, optionally, the abrasive coating (108) covers entirely the leading edge tip chamfer (116).

7. The compressor airfoil according to claim 5 or 6, wherein the trailing edge tip profile (112) comprises a trailing edge tip chamfer (120), and wherein, optionally, the abrasive coating (108) covers entirely the trailing edge tip chamfer (120).

8. The compressor airfoil according to any preceding claim,
wherein the leading edge tip profile (110) comprises a/the leading edge tip radius (114), the leading edge tip radius (114) comprising at least one of: polygonal curvature, polyhedral curvature, complex curvature, conventional curvature and compound curvature.

9. The compressor airfoil according to claim 8, wherein the abrasive coating (108) covers entirely the leading edge tip radius (114).

10. The compressor airfoil according to any preceding claim,
wherein the trailing edge tip profile (112) comprises a/the trailing edge tip radius (118), the trailing edge tip radius (118) comprising at least one of: polygonal curvature, polyhedral curvature, complex curvature, conventional curvature and compound curvature.

11. The compressor airfoil according to claim 10, wherein the abrasive coating (108) covers entirely the trailing edge tip radius (118).

12. A method comprising:
forming a compressor airfoil (100) bounded by a leading edge (102), a trailing edge (104), and a radially outboard edge (106) connecting the leading edge (102) and the trailing edge (104);
forming on the leading edge (102), a leading edge tip profile (110) comprising one of a leading edge tip radius (114) and a leading edge tip chamfer (116), on the leading edge (102); and
forming on the trailing edge (104), a trailing edge tip profile (112) comprising one of a trailing edge tip radius (118) and a trailing edge tip chamfer (120).

13. The method according to claim 12, the leading edge tip profile (110) comprising a leading edge tip radius (114) and the trailing edge tip profile (112) comprising a trailing edge tip radius (118).

14. The method according to claim 12 or 13, further comprising depositing an abrasive coating (108) on the radially outboard edge (106) and at least a portion of the trailing edge tip profile (112).

15. The method according to claim 12, 13 or 14, further comprising depositing an abrasive coating (108) on the radially outboard edge (106) and at least a portion of the leading edge tip profile (110).
